# EUROPÄISCHE PATENTANMELDUNG

(11) **EP 1 463 177 A1**
(43) Veröffentlichungstag der Anmeldung: **29.09.2004**
(21) Anmeldenummer: 03007169.0
(22) Anmeldetag: 28.03.2003
(51) Int. Cl.: H02G 15/18, F16L 59/02, F16L 3/12, D03D 3/02

(54) **Verfahren zum Herstellen eines textilen geflochtenen, gestrickten oder gewirkten Schlauches**

(71) Anmelder: Iprotex GmbH & Co. KG, 95213 Münchberg (DE)
(72) Erfinder: Kesch, Friedhard, 96364 Marktrodach (DE); Leichsenring, René, 96349 Steinwiesen (DE)
(74) Vertreter: Fischer, Matthias, Dipl.-Ing.

(57) **Zusammenfassung**

Es wird ein Verfahren zum Herstellen eines textilen geflochtenen, gestrickten oder gewirkten Schlauches, der monofile und/oder multifile wenigstens teilweise thermoplastische Fäden aufweist, vorgeschlagen, wobei der Schlauch entlang der Schlauchachse im wesentlichen längs aufgeschlitzt wird, das dadurch gekennzeichnet ist, daß der Schlauch derart thermisch verformt wird, daß die Kanten wenigstens geringfügig überlappen.

## Beschreibung

Die vorliegende Erfindung betrifft ein Verfahren zum Herstellen eines textilen geflochtenen, gestrickten oder gewirkten Schlauches, der monofile und/oder multifile wenigstens teilweise thermoplastische Fäden aufweist, wobei der Schlauch entlang der Schlauchachse wenigstens partiell im wesentlichen längs aufgeschlitzt wird.

Zur Ummantelung von längsgestreckten Gegenständen, wie z.B. Kabeln, Leitungen, Profilen und auch Schläuchen u.a. müssen beispielsweise in Kraftfahrzeugen aufgrund von montagetechnischen Gegebenheiten die Umhüllungsmaterialien nachträglich montiert werden, um die längsgestreckten Gegenstände gegen schädigende Einflüsse wie z.B. mechanische Beanspruchung, Abrieb, thermische Einflüsse und dgl. zu schützen.

Aus der europäischen Patentschrift EP 0 611 404 B1 ist ein profiliertes Gewebe und ein Verfahren zur Herstellung desselben bekannt, das aus Schuß- und Kettfäden sowie mindestens einem elastischen filamentartigen Kettfaden besteht. Die hier diskutierte Gewebehülse hat den großen Nachteil, daß sie sich nur sehr schwer für individuell vorliegende kurvenreich verlaufende Kabel oder Drahtverläufe biegen und anpassen läßt. Da sie konstruktionsbedingt relativ starr und sperrig ist, ist sie für eine zeitsparende und damit kostengünstige Montage ungeeignet.

Der vorliegenden Erfindung liegt die Aufgabe zugrunde, ein Verfahren zum Herstellen eines textilen geflochtenen, gestrickten oder gewirkten Schlauches, der monofile und/oder multifile wenigstens teilweise thermoplastische Fäden aufweist, wobei der Schlauch entlang der Schlauchachse im wesentlichen längs aufgeschlitzt wird, vorzuschlagen, mittels dem ein leicht und einfach auch in engen und schwierigen Montagebereichen einsetzbarer Schlauch geschaf fen werden kann.

Die Aufgabe wird gelöst durch ein Verfahren gemäß Anspruch 1. Ein damit erzeugter Schlauch hat die Tendenz, sich gleichsam zusammenzurollen. Dieser Effekt ist von sehr großen Vorteil insofern, als er als Umklammerungskomponente der aufgeschlitzten Schlauchummantelung für zu fangende und zu bündelnde Drähte, Schläuche etc. bestens geeignet ist. Ein damit erzeugter Schlauch ist aufgrund seiner textilen Konstruktion auch äußerst längs- und querelastisch und läßt sich universell jeder noch so schwierigen Kabelverlaufssituation anpassen und insbesondere im Bereich von Kabelbaumummantelungen und dgl. einsetzen. Die wenigstens partielle Längsaufschlitzung erlaubt es, über längere Bereiche, beispielsweise am Ende eines Kabelbündels, den erfindungsgemäßen Schlauch aufzuschieben und zwar mit einem nicht durchgängig geschlitzten Teil, wonach der Rest des Schlauches gleichsam die Kabel des zu ummantelnden Kabelbaums umklammernd montiert wird. Der erfindungsgemäß hergestellte Schlauch hat auch in seinem geschlitzten Zustand die Eigenschaft, daß er ohne äußere Krafteinwirkung seine Schlauchform beibehält oder nach Aufbiegen des Schlauchs zur Montage seine ursprüngliche Schlauchform soweit wie möglich wieder einnimmt. Damit eignet sich der erfindungsgemäß hergestellte Schlauch hervorragend zur nachträglichen Montage, um um längsgestreckte Gegenstände als ummantelnde Manschette herumgelegt zu werden.

In einer vorteilhaften Weiterbildung des erfindungsgemäßen Verfahrens enthält in vorteilhafter Weise den Verfahrensschritt: Entlang der Schlauchachse insbesondere durch Kalt-, Heiß- oder Ultraschallschneiden aufschneiden. Hierdurch ergibt sich günstigerweise schon beim Schnitt eine sehr zweckmäßige Kantenversiegelung, wodurch ein Ausfransen des aufgetrennten Materials verhindert wird. Eine weitere vorteilhafte Ausgestaltung der Kantenbildung kann durch zusätzliches Verschweißen der Kanten erreicht werden, besonders wenn besondere Kantenformen gewünscht werden.

In einer vorteilhaften Weiterbildung des erfindungsgemäßen Verfahrens wird der Schlauch parallel zur Schlauchachse längsgeschlitzt. Diese Variation ist dann sehr zweckmäßig, wenn für den Beginn eines Kabelbaums kein geschlossener Schlauchabschnitt benötigt wird.

In einer weiteren vorteilhaften Ausbildung des erfindungsgemäßen Verfahrens wird der erfindungsgemäß hergestellte Schlauch wellen- oder zickzackförmig geschlitzt. Dadurch wird gerade im Kantenbereich des Schlitzes ein Höchstmaß an axialer Biegeelastizität erreicht, was die Verlegearbeit und den letztendlichen Sitz des als Manschette eingesetzten Schlauches noch weiter verbessert. Hier ist auch wiederum die erfindungsgemäße Ausbildung als geflochtener, gestrickter oder gewirkter Schlauch in Kombination mit der jeweiligen Schlitzung von Vorteil.

In einer weiteren vorteilhaften Ausbildung des erfindungsgemäßen Verfahrens werden die bei beim Schlitzen erzeugten Kanten platiert, wodurch sich die Oberflächen der Kanten individuell formen lassen, beispielsweise durch Bildung von abgerundeten oder "versäuberten" Kanten.

In einer weiteren vorteilhaften Ausbildung des erfindungsgemäßen Verfahrens werden die Kanten durch Verschweißen versiegelt, wodurch sich noch besser versäuberte Kanten erreichen lassen.

Weitere Vorteile der Erfindung sind den Unteransprüchen zu entnehmen.

Zum besseren Verständnis der Erfindung wird diese nun anhand einer Zeichnung kurz näher erläutert.
- Figur 1: zeigt in schematischer Darstellung einen teilweise geschlitzten Schlauch.
- Figuren 2, 3 und 4: zeigen Ausgestaltungen der Schlitzform im Schlauch.
- Figuren 5 und 6: zeigen einen nach dem erfindungsgemäßen Verfahren hergestellten Schlauch nach thermischer Behandlung in schematischer Darstellung perspektivisch (Figur 5) und die Darstellung von Figur 5 von rechts gesehen (Figur 6).

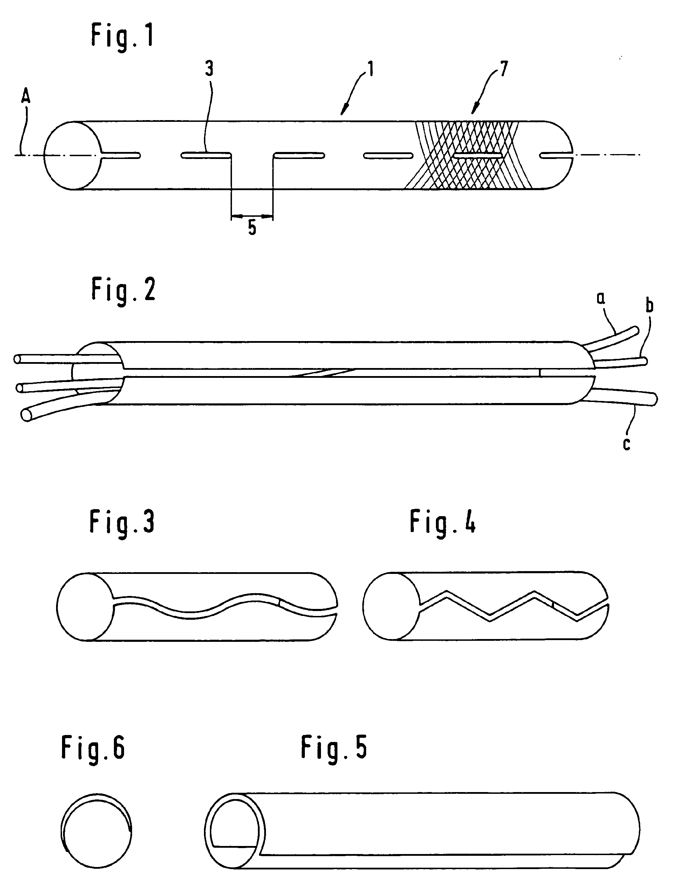

Figur 5 zeigt einen nach dem erfindungsgemäßen Verfahren hergestellten Schlauch nach Einbringen eines durchgehenden geraden Schlitzes und thermischer Behandlung des geschlitzten Schlauches. Man erkennt in den Figuren 5 und 6 sehr gut, daß der thermisch behandelte Schlauch die Tendenz hat, spiralförmig ineinanderzurollen. Dies hat den großen Vorteil, daß einerseits unterschiedliche Bündelstärken im Verlauf eines Kabelbaums mit ein und demselben Schlauchkörper ummantelt werden können und andererseits ein die ummantelten Gegenstände zusammenpackender Effekt erreicht wird, so daß die gesamte Anordnung wesentlich kompakter und damit leichter zu handhaben ist. Eine solche thermische Behandlung kann eine thermische Verformung um mindestens auf die Hälfte des vorgelegten Durchmessers sein, damit das Endprodukt Formstabilität und Rücksprungkraft, d.h. Beibehaltung der Flexibilität erhält, um sich, wie bereits erwähnt, beim Montagevorgang auf die längsgestreckten, zu ummantelnden Gegenstände eng an ihnen anzulegen.

Schneideverfahren zur vorteilhaften Gestaltung der Kanten können Ultraschallschneidetechnik, Hochfrequenz- oder Temperaturschneideverfahren sein.

Insbesondere durch seine geflechtartig aufgebaute Wandung ist der erfindungsgemäß hergestellte Schlauch sowohl axial wie auch radial durch das flexible Aufschiebeverhalten der miteinander verflochtenen Fäden selbstanpassend auf die jeweilige Oberfläche anzubringen. Dies wird besonders vorteilhaft unterstützt durch die beim Flechten entstehende Winkelstellung der sich in einem Winkel von etwa 80° kreuzenden Fäden ergibt. Hierbei können Multifil- wie Monofilfäden in unterschiedlicher Zusammensetzung und Stärke zum Einsatz kommen.

Die Kombination der Vorteile des Geflechtschlauches mit den Vorteilen einer wenigstens partiell entlang seiner Längsachse verlaufenden Längsschlitzung führt zu den im Vorhergehenden beschriebenen zahlreichen Vorteilen.

Figur 1 zeigt einen Schlauch 1 mit einer Schlauchachse A, die sich zentral durch den Schlauch 1 erstreckt. Der Schlauch 1, der hier zur Vereinfachung der Darstellung als Vollmaterial gezeigt ist, besteht jedoch tatsächlich aus Strick-, Wirk- oder Flechtware, wobei als Garnmaterial vorzugsweise thermoplastische Materialien wie Polyamide, Polyester sowie auch eingearbeitete Schmelzkleberfäden und metallische Komponenten wie Drähte und dgl. oder auch glasfaserartige oder keramische Materialien eingesetzt werden können. Die Fadengebilde können hierbei monofilartig oder multifilartig aufgebaut sein, um beispielsweise bei einem Einsatz von multifilen filamentartigen Materialien eine zusätzliche geräuschdämmende Funktion zu übernehmen. In dem Schlauch nach Figur 1 sind entlang der Schlauchachse A Schlitze 3 eingebracht, die hier beispielhaft in einem Abstand 5 hintereinander folgen. Sollte die aus dem Schlauch 1 gebildete Hülse für beispielsweise in Figur 2 zu erkennende Drähte a, b, c verwendet werden, so kann man in dem Bereich, in dem die Drähte a, b, c als Kabelbaumanfang gebündelt vorliegen, die aus dem Schlauch gebildete Manschette in der Gestalt, wie sie in Figur 1 gezeigt ist, überschieben. Ab der ersten Abzweigung und dem weiteren Verlauf des (nicht gezeigten) Kabelbaumes werden dann die Abstände 5 zwischen den Schlitzen 3 (Figur 1) ebenfalls aufgeschlitzt. Die hierbei eigentlich zerstörte Textilstruktur wird in Figur 1 beispielhaft als Geflechtstruktur 7 angedeutet.

Figur 2 zeigt einen Schlauch mit parallel zur Schlauchachse längsorientiertem Schlitz. Der so ausgebildete Schlauch kann über seine gesamte Länge aufgeklappt werden, um hier beispielhaft mit Schläuchen oder Drähten a, b, c bezeichnete langgestreckte Gegenstände zu umgreifen bzw. zu ummanteln.

Die Figuren 3 und 4 zeigen vorteilhafte Abwandlungen des im wesentlichen der Schlauchachse A folgenden Längsschlitzes in Form einer Wellenlinie (Figur 3) und einer Zick-zack-Linie (Figur 4). Diese Ausgestaltung ist besonders dann von Vorteil, wenn die zu ummantelnden Drähte, Litzen oder Schläuche sehr dünn sind. Wellen- bzw. zickzackförmige Schlitze verhindern ein Heraustreten solcher dünner Litzen oder Drähte aus der Ummantelung des Schlauchs.

## Patentansprüche

1. Verfahren zum Herstellen eines textilen geflochtenen, gestrickten oder gewirkten Schlauches, der monofile und/oder multifile wenigstens teilweise thermoplastische Fäden aufweist, wobei der Schlauch entlang der Schlauchachse im wesentlichen längs aufgeschlitzt wird, **dadurch gekennzeichnet, daß** der Schlauch derart thermisch verformt wird, daß die Kanten wenigstens geringfügig überlappen.

2. Verfahren nach Anspruch 1, **dadurch gekennzeichnet, daß** der Schlauch entlang der Schlauchachse insbesondere durch Kalt-, Heiß- oder Ultraschallschneiden aufgeschnitten wird.

3. Verfahren nach Anspruch 1, **dadurch gekennzeichnet, daß** er parallel zur Schlauchachse längsgeschlitzt wird.

4. Verfahren nach Anspruch 1, 2 oder 3, **dadurch gekennzeichnet, daß** er wellen- oder zick-zack-förmig geschlitzt wird.

5. Verfahren nach einem der vorhergehenden Ansprüche, **dadurch gekennzeichnet, daß** die beim Schlitzen erzeugten Kanten platiert werden.

6. Verfahren nach einem der vorhergehenden Ansprüche, **dadurch gekennzeichnet, daß** die Kanten durch Verschweißen versiegelt werden.
